# EUROPEAN PATENT APPLICATION

(11) **EP 4 618 353 A1**
(43) Date of publication of application: **17.09.2025**
(21) Application number: 23890796.8
(22) Date of filing: 15.11.2023
(51) Int. Cl.: H02J 3/38, G05F 1/67

(54) **PHOTOVOLTAIC INVERTER AND POWER ADJUSTMENT METHOD THEREFOR, AND PHOTOVOLTAIC SYSTEM**

(30) Priority: 18.11.2022 CN 202211443749
(71) Applicant: Huawei Digital Power Technologies Co., Ltd., Shenzhen, Guangdong 518043 (CN)
(72) Inventor: XU, Fei, Shenzhen, Guangdong 518043 (CN); YU, Xinyu, Shenzhen, Guangdong 518043 (CN); XIN, Kai, Shenzhen, Guangdong 518043 (CN); CHEN, Dong, Shenzhen, Guangdong 518043 (CN); LIU, Yunfeng, Shenzhen, Guangdong 518043 (CN)
(74) Representative: Maiwald GmbH
(86) International application number: PCT/CN2023/131673
(87) International publication number: WO 2024/104363

(57) **Abstract**

This application relates to a photovoltaic inverter and a power adjustment method thereof, and a photovoltaic system. The photovoltaic inverter includes a direct current conversion unit, an alternating current inverter unit, a control unit, and a direct current bus. An input end of the direct current conversion unit is configured to connect to a photovoltaic module. An output end of the direct current conversion unit is connected to an input end of the alternating current inverter unit through the direct current bus. An output end of the alternating current inverter unit is configured to connect to a load. The control unit is configured to: when a load power is less than a maximum power output by the photovoltaic module in a current illumination environment, control the direct current conversion unit to switch from an MPPT mode to a bus constant mode, so that an input voltage of the direct current conversion unit changes with the load power, and an output power of the photovoltaic module and an output power needed by the photovoltaic inverter keep being adjusted synchronously. The bus constant mode is to adjust an output voltage of the direct current conversion unit to a constant value or to be within a preset range. According to this application, a power response speed of the photovoltaic inverter can be improved.

## Description

This application claims priority to Chinese Patent Application No. 202211443749.4, filed with the China National Intellectual Property Administration on November 18, 2022 and entitled "PHOTOVOLTAIC INVERTER AND POWER ADJUSTMENT METHOD THEREOF, AND PHOTOVOLTAIC SYSTEM", which is incorporated herein by reference in its entirety.

### TECHNICAL FIELD

This application relates to the field of power electronics technologies, and in particular, to a photovoltaic inverter and a power adjustment method thereof, and a photovoltaic system.

### BACKGROUND

A photovoltaic system is a new-type power generation system that converts solar radiation energy into electric energy for use by a mains power grid through photovoltaic effect of a photovoltaic solar panel. A photovoltaic inverter is a core part in the photovoltaic system, and is mainly responsible for converting a direct current generated by a photovoltaic module into an alternating current, and outputting the alternating current to the mains power grid for use by the mains power grid. A two-stage inverter is a widely used photovoltaic inverter, and includes a direct current conversion unit and an alternating current inverter unit. The direct current conversion unit is mainly responsible for performing maximum power point tracking (maximum power point tracking, MPPT) on the photovoltaic module, and the alternating current inverter unit is mainly responsible for connecting a maximum power tracked by the direct current conversion unit to the power grid. In a maximum power point tracking process, the direct current conversion unit usually perturbs a port voltage of the photovoltaic module at a fixed step size, to perform maximum power tracking. In a steady state, the direct current conversion unit runs near a maximum power point of the photovoltaic module.

A grid-connected power (that is, an input power of the power grid or an output power of the alternating current inverter unit) of the photovoltaic inverter has a requirement of rapid power change. In consideration of this, a requirement of rapid power adjustment is correspondingly raised for the direct current conversion unit. If the direct current conversion unit has a slow power control speed, the output power of the alternating current inverter unit is not matched. Currently, when the grid-connected power of the photovoltaic inverter needs to be lowered rapidly, the direct current conversion unit calculates a power variation, and controls the port voltage of the photovoltaic module at a specific step size to approach an open-circuit voltage of the photovoltaic module, to lower the output power of the direct current conversion unit. When the grid-connected power of the photovoltaic inverter needs to be increased rapidly, the direct current conversion unit calculates a power variation, and controls the port voltage of the photovoltaic module at a specific step size to approach a short-circuit voltage of the photovoltaic module, to increase the output power of the direct current conversion unit.

However, the direct current conversion unit controls the output power of the direct current conversion unit by sensing the power variation and then controlling the port voltage of the photovoltaic module at the specific step size. In this case, the following problems occur: A power response speed is slow, and the output power of the direct current conversion unit cannot rapidly match the output power of the alternating current inverter unit.

### SUMMARY

Embodiments of this application provide a photovoltaic inverter and a power adjustment method thereof, and a photovoltaic system, to improve a power response speed of the photovoltaic inverter, so that an output power of a direct current conversion unit quickly matches an output power of an alternating current inverter unit.

According to a first aspect, this application provides a photovoltaic inverter. The photovoltaic inverter includes a direct current conversion unit, an alternating current inverter unit, a control unit, and a direct current bus. An input end of the direct current conversion unit is configured to connect to a photovoltaic module. An output end of the direct current conversion unit is connected to an input end of the alternating current inverter unit through the direct current bus. An output end of the alternating current inverter unit is configured to connect to a load. The control unit is configured to: when a load power is less than a maximum power output by the photovoltaic module in a current illumination environment, control the direct current conversion unit to switch from an MPPT mode to a bus constant mode, so that an input voltage of the direct current conversion unit changes with the load power, and an output power of the photovoltaic module and an output power needed by the photovoltaic inverter keep being adjusted synchronously. The bus constant mode is to adjust an output voltage of the direct current conversion unit to a constant value or to be within a preset range. Therefore, when the load power is less than the maximum power output by the photovoltaic module in the current illumination environment, the control unit in this application controls the direct current conversion unit to switch from the MPPT mode to the bus constant mode. In this way, the input voltage of the direct current conversion unit changes with the load power, to improve a power response speed of the direct current conversion unit, so that the output power of the direct current conversion unit can quickly match the output power of the alternating current inverter unit.

Optionally, the preset range in this application is greater than a peak value of an output voltage of the alternating current inverter unit. In this way, it can be ensured that the alternating current inverter unit can output a current. The preset range in this application may also be less than a value. The value may be obtained based on experimental data in an actual application scenario.

With reference to the first aspect, in a possible implementation, when the direct current conversion unit is in the MPPT mode, the direct current conversion unit performs MPPT to maximize an output power of the direct current conversion unit. When performing MPPT, the direct current conversion unit may perturb a port voltage of the photovoltaic module (that is, the input voltage of the direct current conversion unit) at a fixed step size, to perform maximum power tracking. When the direct current conversion unit is in the bus constant mode, the direct current conversion unit adjusts the output voltage of the direct current conversion unit to the constant value or to be within the preset range, so that the bus voltage remains in a constant voltage state. The constant voltage state herein does not mean that the voltage is constant at a value. The constant voltage state herein is relative. Certainly, the constant voltage state may allow fluctuation within a specific range. Therefore, the control unit is configured to: when controlling the direct current conversion unit to switch from the MPPT mode to the bus constant mode, switch from controlling the input voltage of the direct current conversion unit to controlling, by adjusting a duty cycle of a control signal of the direct current conversion unit, the output voltage of the direct current conversion unit to be adjusted to the constant value or to be within the preset range.

It may be understood that when the load power changes, the bus voltage fluctuates temporarily. For example, when the load power rises, a phenomenon in which the bus voltage drops transiently occurs. When the load rises, a phenomenon in which the bus voltage rises transiently occurs.

With reference to the first aspect, in a possible implementation, when the load power is zero, the direct current conversion unit is in the bus constant mode, and the direct current conversion unit may increase the output voltage of the direct current conversion unit to a bus reference voltage value based on an input voltage provided by the photovoltaic module, to implement the bus constant mode. The bus reference voltage value is greater than a lower limit value of the preset range and less than an upper limit value of the preset range. In other words, the bus reference voltage value is a value within the preset range.

With reference to the first aspect, in a possible implementation, when the load power rises to be greater than zero and less than the maximum power output by the photovoltaic module in the current illumination environment, the direct current conversion unit is still in the bus constant mode. When detecting that the output voltage of the direct current conversion unit drops to be less than a bus reference voltage value, the direct current conversion unit increases the output power of the photovoltaic module, so that the output voltage of the direct current conversion unit rises to the bus reference voltage value, to implement the bus constant mode.

With reference to the first aspect, in a possible implementation, when the direct current conversion unit is in the bus constant mode and the load power drops, and the direct current conversion unit detects that the output voltage of the direct current conversion unit rises to be greater than the bus reference voltage value, the direct current conversion unit lowers the output power of the photovoltaic module, so that the output voltage of the direct current conversion unit drops to the bus reference voltage value, to implement the bus constant mode.

With reference to the first aspect, in a possible implementation, the control unit is further configured to: when the load power is greater than or equal to the maximum power output by the photovoltaic module in the current illumination environment, control the direct current conversion unit to switch from the bus constant mode to the MPPT mode to perform MPPT on the photovoltaic module.

Alternatively, when the direct current conversion unit is in the MPPT mode, and the alternating current inverter unit detects that the output voltage of the direct current conversion unit is not equal to the bus reference voltage value, the alternating current inverter unit lowers an output power of the alternating current inverter unit, to adjust the output voltage of the direct current conversion unit to the bus reference voltage value.

According to a second aspect, this application provides a power adjustment method for a photovoltaic inverter. The method is applied to the photovoltaic inverter. The photovoltaic inverter includes a direct current conversion unit, an alternating current inverter unit, and a direct current bus. An input end of the direct current conversion unit is configured to connect to a photovoltaic module. An output end of the direct current conversion unit is connected to an input end of the alternating current inverter unit through the direct current bus. An output end of the alternating current inverter unit is configured to connect to a load. This method includes: detecting a load power and a maximum power output by the photovoltaic module in a current illumination environment; and when the load power is less than the maximum power output by the photovoltaic module in the current illumination environment, controlling the direct current conversion unit to switch from an MPPT mode to a bus constant mode, so that an input voltage of the direct current conversion unit changes with the load power, and an output power of the photovoltaic module and an output power needed by the photovoltaic inverter keep being adjusted synchronously. The bus constant mode is to adjust an output voltage of the direct current conversion unit to a constant value or to be within a preset range.

In this application, the load power and the maximum power output by the photovoltaic module in the current illumination environment are monitored in real time. Further, when the load power is less than the maximum power output by the photovoltaic module in the current illumination environment, the direct current conversion unit is controlled to switch from the MPPT mode to the bus constant mode, so that the input voltage of the direct current conversion unit changes with the load power, and the output power of the photovoltaic module is consistent with the output power needed by the photovoltaic inverter. In this way, the power response speed of the photovoltaic inverter is improved, so that the output power of the direct current conversion unit can quickly match the load power.

Optionally, the preset range in this application is greater than a peak value of an output voltage of the alternating current inverter unit. In this way, it can be ensured that the alternating current inverter unit can output a current. The preset range in this application may also be less than a value. The value may be obtained based on experimental data in an actual application scenario.

It should be noted that when the direct current conversion unit is in the MPPT mode, the direct current conversion unit performs MPPT to maximize an output power of the direct current conversion unit. When performing MPPT, the direct current conversion unit may perturb a port voltage of the photovoltaic module (that is, the input voltage of the direct current conversion unit) at a fixed step size, to perform maximum power tracking. When the direct current conversion unit is in the bus constant mode, the direct current conversion unit adjusts the output voltage of the direct current conversion unit to the constant value or to be within the preset range, so that the bus voltage remains in a constant voltage state. The constant voltage state herein does not mean that the voltage is constant at a value. The constant voltage state herein is relative. Certainly, the constant voltage state may allow fluctuation within a specific range.

With reference to the second aspect, in a possible implementation, the controlling the direct current conversion unit to switch from an MPPT mode to a bus constant mode includes: when controlling the direct current conversion unit to switch from the MPPT mode to the bus constant mode, adjusting a duty cycle of a control signal of the direct current conversion unit, to switch from controlling the input voltage of the direct current conversion unit to controlling the output voltage of the direct current conversion unit to be adjusted to the constant value or to be within the preset range.

It may be understood that when the load power changes, the bus voltage fluctuates temporarily. For example, when the load power rises, a phenomenon in which the bus voltage drops transiently occurs. When the load rises, a phenomenon in which the bus voltage rises transiently occurs.

With reference to the second aspect, in a possible implementation, after the controlling the direct current conversion unit to switch from an MPPT mode to a bus constant mode, the method further includes: when the load power is zero, increasing the output voltage of the direct current conversion unit to a bus reference voltage value based on an input voltage provided by the photovoltaic module, to implement the bus constant mode. The bus reference voltage value is greater than a lower limit value of the preset range and less than an upper limit value of the preset range. In other words, the bus reference voltage value is a value within the preset range.

With reference to the second aspect, in a possible implementation, after the controlling the direct current conversion unit to switch from an MPPT mode to a bus constant mode, the method further includes: when the load power rises to be greater than zero and less than the maximum power output by the photovoltaic module in the current illumination environment, and it is detected that the output voltage of the direct current conversion unit drops to be less than a bus reference voltage value, increasing the output power of the photovoltaic module, so that the output voltage of the direct current conversion unit rises to the bus reference voltage value, to implement the bus constant mode.

With reference to the second aspect, in a possible implementation, after the controlling the direct current conversion unit to switch from an MPPT mode to a bus constant mode, the method further includes: when the load power drops, and it is detected that the output voltage of the direct current conversion unit rises to be greater than the bus reference voltage value, lowering the output power of the photovoltaic module, so that the output voltage of the direct current conversion unit drops to the bus reference voltage value, to implement the bus constant mode.

With reference to the second aspect, in a possible implementation, the method further includes: when the load power is greater than or equal to the maximum power output by the photovoltaic module in the current illumination environment, controlling the direct current conversion unit to switch from the bus constant mode to the MPPT mode to perform MPPT on the photovoltaic module.

Alternatively, after the controlling the direct current conversion unit to switch from the bus constant mode to the MPPT mode, the method further includes: when it is detected that the output voltage of the direct current conversion unit is not equal to the bus reference voltage value, lowering an output power of the alternating current inverter unit, to adjust the output voltage of the direct current conversion unit to the bus reference voltage value.

Alternatively, after the lowering an output power of the alternating current inverter unit, to adjust the output voltage of the direct current conversion unit to the bus reference voltage value, the method further includes: controlling a port voltage of the photovoltaic module to drop to a target voltage value, where the target voltage value is less than a voltage value corresponding to the maximum power output by the photovoltaic module in the current illumination environment. In this way, the output power of the photovoltaic module can be lowered. In addition, a possibility that the direct current conversion unit and the alternating current inverter unit fail can be reduced.

According to a third aspect, this application provides a photovoltaic system. The photovoltaic system includes a photovoltaic module, and the photovoltaic inverter according to the first aspect or any one of the possible implementations of the first aspect, or the photovoltaic inverter that uses the method according to the second aspect or any one of the possible implementations of the second aspect. An input end of the photovoltaic inverter is connected to the photovoltaic module. An output end of the photovoltaic inverter is configured to connect to a load. The photovoltaic inverter is configured to: convert a direct current of the photovoltaic module into an alternating current and input the alternating current to the load; and when a load power is less than a maximum power output by the photovoltaic module in a current illumination environment, control the direct current conversion unit to switch from an MPPT mode to a bus constant mode, so that an input voltage of the direct current conversion unit changes with the load power, and an output power of the photovoltaic module and an output power needed by the photovoltaic inverter keep being adjusted synchronously. The bus constant mode is to adjust an output voltage of the direct current conversion unit to a constant value or to be within a preset range.

It may be understood that implementations and technical effects of the foregoing aspects may be mutually referenced. Details are not described herein again.

### BRIEF DESCRIPTION OF DRAWINGS

FIG. 1 is a diagram of an application scenario of a photovoltaic system according to an embodiment of this application;
FIG. 2 is a diagram of a structure of a photovoltaic system according to an embodiment of this application;
FIG. 3 is a diagram of another structure of a photovoltaic system according to an embodiment of this application;
FIG. 4 is a diagram of still another structure of a photovoltaic system according to an embodiment of this application;
FIG. 5 is a diagram of a P-U curve of a photovoltaic module according to an embodiment of this application;
FIG. 6 is a diagram of a bus voltage-time curve according to an embodiment of this application; and
FIG. 7 is a schematic flowchart of a power adjustment method for a photovoltaic inverter according to an embodiment of this application.

### DESCRIPTION OF EMBODIMENTS

In the descriptions of this application, unless otherwise specified, "/" generally indicates an "or" relationship between associated objects. For example, A/B may indicate A or B. A term "and/or" in this specification describes only an association relationship between associated objects and indicates that there may be three relationships. For example, A and/or B may represent the following three cases: Only A exists, both A and B exist, and only B exists.

Solar energy is a type of inexhaustible and pollution-free green energy from nature. In other words, the solar energy is a type of renewable and clean energy that is widely used in lives and work of people. One way of using the solar energy is to convert the solar energy into electric energy. Solar power generation can be divided into solar thermal power generation and photovoltaic power generation. Photovoltaic power generation (photovoltaic power generation) is a technology of converting light energy into electric energy through photovoltaic effect of a semiconductor interface. A photovoltaic system provided in this application may be a photovoltaic system based on solar photovoltaic power generation (for ease of description, referred to as a photovoltaic system for short below). Solar photovoltaic power generation features absence of a moving part, noise, and pollution, and high reliability, and has extensive application prospect in a communication photovoltaic system in a remote region.

The photovoltaic system provided in this application is applicable to power supply of a plurality of types of power-consuming devices such as a base station device in a remote region with no or poor mains electricity, a battery, or a household device (for example, a refrigerator or an air conditioner). Specific application may be determined based on an actual application scenario. This is not limited herein. A photovoltaic inverter provided in this application is applicable to the photovoltaic system; may be configured to convert a variable direct current generated by a direct current power supply such as a photovoltaic module into an alternating current of a mains electricity frequency, and output the alternating current to a mains power grid for use by the mains power grid; and specifically, may be used by a base station device, a battery, or a household device in the mains power grid. The photovoltaic system provided in this application may be applied to different application scenarios, for example, a photovoltaic power supply scenario and a photovoltaic-and-storage hybrid power supply scenario. A specific scenario may be determined based on an actual application scenario. This is not limited herein. In the photovoltaic power supply scenario, a power supply for supplying power is a photovoltaic module. In the photovoltaic-and-storage hybrid power supply scenario, a power supply for supplying power includes a photovoltaic module and an energy storage battery string. This application is described by using the photovoltaic power supply scenario as an example.

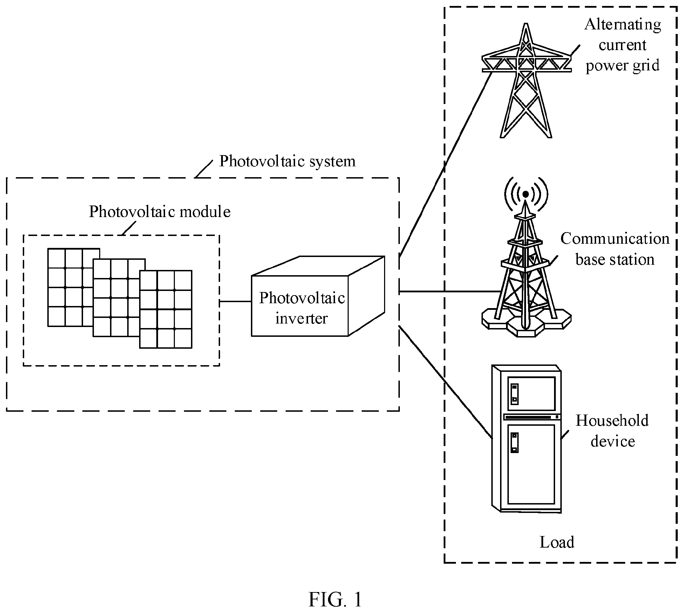

FIG. 1 is a diagram of an application scenario of a photovoltaic system according to an embodiment of this application. In a photovoltaic power supply scenario, the photovoltaic system shown in FIG. 1 may include a photovoltaic module and a photovoltaic inverter. An output end of the photovoltaic module is connected to an input end of the photovoltaic inverter. An output end of the photovoltaic inverter is connected to a load such as an alternating current power grid, a household device, or a communication base station. Optionally, there may be a plurality of photovoltaic modules connected to the input end of the photovoltaic inverter herein. The plurality of photovoltaic modules may be connected in series and/or in parallel and then connected to the photovoltaic inverter. The photovoltaic module herein may be a solar panel, a photovoltaic panel, or the like. After the photovoltaic system starts to run, the photovoltaic inverter may convert a direct current input by the photovoltaic module into an alternating current and transmit the alternating current to a load for use by the alternating current power grid, the communication base station, the household device, or the like in the load.

The foregoing is merely an example of the application scenario of the photovoltaic system provided in this application, but is not exhaustive. The application scenario is not limited in this application.

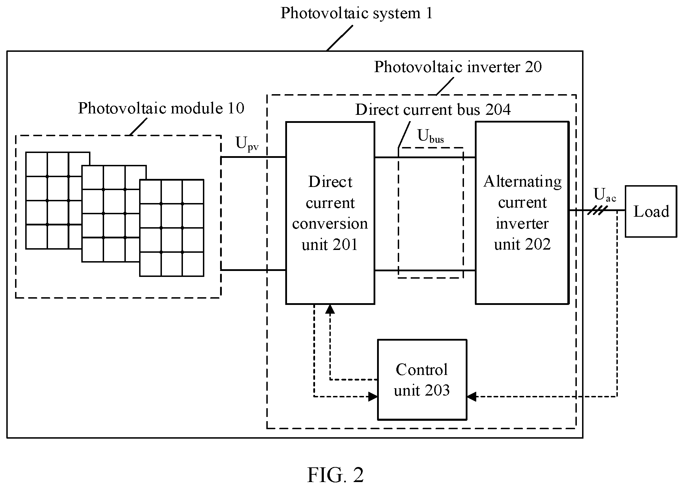

With reference to FIG. 2 to FIG. 7, the following describes, by using examples, a photovoltaic system, a photovoltaic inverter, and a power adjustment method for the photovoltaic inverter provided in this application.

For ease of description, the following is described by using an example in which a load connected to an output end of the photovoltaic inverter is an alternating current power grid.

FIG. 2 is a diagram of a structure of a photovoltaic system according to an embodiment of this application. As shown in FIG. 2, the photovoltaic system 1 may include a photovoltaic module 10 and a photovoltaic inverter 20. The photovoltaic module 10 is connected to an input end of the photovoltaic inverter 20, and is configured to provide electric energy (that is, to supply power) for the photovoltaic inverter 20, for example, provide an input current, an input voltage, or an input power. An output end of the photovoltaic inverter 20 may be connected to a load (for example, an alternating current power grid or a household device). The photovoltaic inverter is configured to convert a direct current input by the photovoltaic module 10 into an alternating current and transmit the alternating current to the load for use by the load.

In the photovoltaic system 1 shown in FIG. 2, the photovoltaic inverter 20 may include a direct current conversion unit 201, an alternating current inverter unit 202, a control unit 203, and a direct current bus 204. An input end of the direct current conversion unit 201 is connected to the photovoltaic module 10. An output end of the direct current conversion unit 201 may be connected to an input end of the alternating current inverter unit 202 through the direct current bus 204. An output end of the alternating current inverter unit 202 is connected to the load. The control unit 203 may be connected to the output end of the alternating current inverter unit 202, and can monitor an output power (that is, an input power of the load, which is referred to as a load power in this application for short, where details are not described below again) of the alternating current inverter unit 202 in real time. The control unit 203 may be further connected to the direct current conversion unit 201, and can obtain, from the direct current conversion unit 201, a maximum power output by the photovoltaic module 10 in a current illumination environment and control the direct current conversion unit 201 to perform mode switching.

It may be understood that, in the photovoltaic system 1 shown in FIG. 2, Uₚᵥ represents an output voltage of the photovoltaic module 10, U_{bus} represents a bus voltage on the direct current bus 204, and U_{ac} represents an output voltage of the alternating current inverter unit 202.

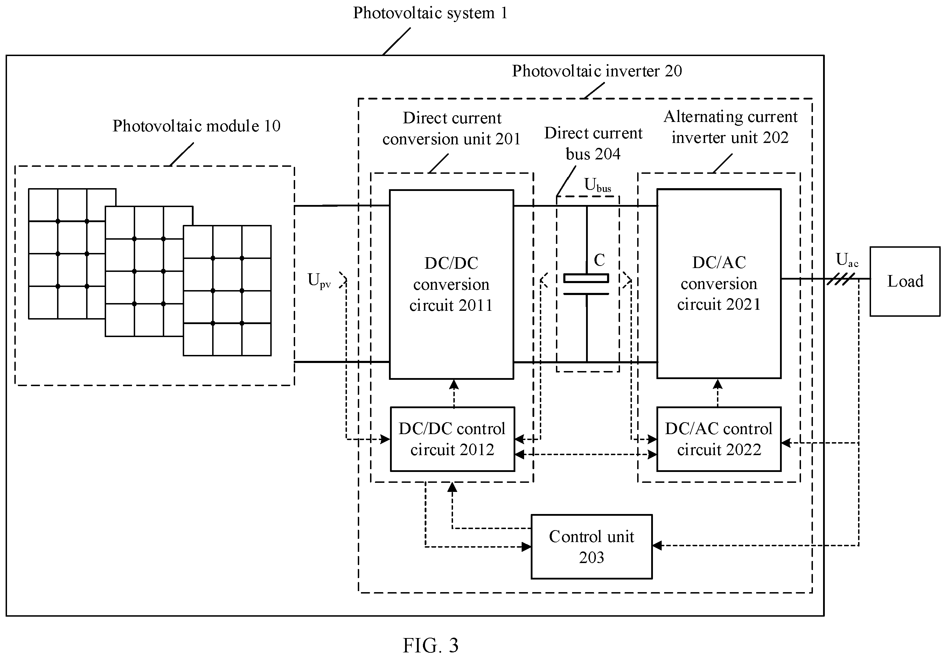

Optionally, the direct current bus 204 may include one bus capacitor or a plurality of bus capacitors connected in series to each other, and may be configured to store energy. FIG. 3 is a diagram of another structure of a photovoltaic system according to an embodiment of this application. In the photovoltaic system 1 shown in FIG. 3, the direct current bus 204 includes a bus capacitor C. The direct current conversion unit 201 may perform processing such as rectification or voltage step-up on a direct current output by the photovoltaic module 10, and output a processed direct current and store the processed direct current on two ends of the bus capacitor C. The alternating current inverter unit 202 may convert the direct current on the two ends of the bus capacitor C into an alternating current of a corresponding power for use by the load.

In some feasible implementations, as shown in FIG. 3, the direct current conversion unit 201 may include a direct current (direct current, DC)/DC conversion circuit 2011 and a DC/DC control circuit 2012. The alternating current inverter unit 202 may include a DC/alternating current (alternating current, AC) conversion circuit 2021 and a DC/AC control circuit 2022. An input end of the DC/DC conversion circuit 2011 is connected to the photovoltaic module 10. An output end of the DC/DC conversion circuit 2011 is connected to an input end of the DC/AC conversion circuit 2021 through the direct current bus 204. An output end of the DC/AC conversion circuit 2021 is connected to the load.

The DC/DC control circuit 2012 and the DC/AC control circuit 2022 may be connected, to exchange information. The DC/DC control circuit 2012 may be configured to connect to the photovoltaic module 10, and can monitor and/or control one or more of the output voltage (Uₚᵥ), an output current, and an output power of the photovoltaic module 10 in real time. The DC/DC control circuit 2012 may be further connected to the bus capacitor C on the direct current bus 204, and can monitor a voltage of the bus capacitor C in real time, that is, the bus voltage (U_{bus}). The DC/DC control circuit 2012 may be further connected to the DC/DC conversion circuit 2011, and can control an output voltage of the DC/DC conversion circuit 2011. The DC/AC control circuit 2022 may also be connected to the bus capacitor C on the direct current bus 204, and can monitor the voltage of the bus capacitor C in real time, that is, the bus voltage (U_{bus}). The DC/AC control circuit 2022 may be further connected to the DC/AC conversion circuit 2021, and can monitor and control an output power of the DC/AC conversion circuit 2021 (that is, the load power) in real time.

Optionally, in the photovoltaic system 1 shown in each of FIG. 2 and FIG. 3, the direct current conversion unit 201 of the photovoltaic inverter 20 may be a DC/DC converter that can perform processing such as rectification or voltage step-up on a direct current input by the photovoltaic module 10 and then output a processed direct current. Optionally, the alternating current inverter unit 202 of the photovoltaic inverter 20 may be a DC/AC converter that can convert, into an alternating current, a direct current output by the DC/DC converter. The control unit 203 of the photovoltaic inverter 20 may be a controller, a control chip, a control system, an application-specific integrated circuit (application-specific integrated circuit, ASIC), a field-programmable gate array (field-programmable gate array, FPGA) or another programmable logic device, a discrete gate, a transistor logic device, or the like.

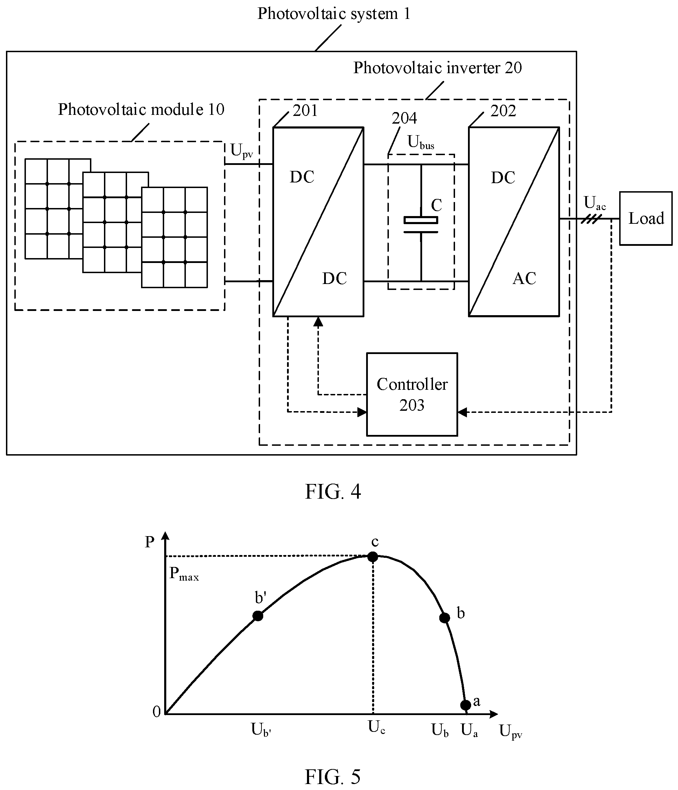

FIG. 4 is a diagram of still another structure of a photovoltaic system according to an embodiment of this application. In the photovoltaic system 1 shown in FIG. 4, the photovoltaic inverter 20 includes a DC/DC converter 201, a DC/AC converter 202, a direct current bus 204, and a controller 203. An input end of the DC/DC converter 201 is connected to the photovoltaic module 10. An output end of the DC/DC converter 201 may be connected to an input end of the DC/AC converter 202 through the direct current bus 204. An output end of the DC/AC converter 202 is connected to an alternating current power grid. The DC/DC converter 201 may perform processing such as rectification or voltage step-up on a direct current output by the photovoltaic module 10, to obtain a direct current that can meet an input voltage requirement of the DC/AC converter 202 and store the direct current on two ends of a bus capacitor C on the direct current bus 204 is obtained. The DC/AC converter 202 may convert a direct current voltage on two ends of the bus capacitor C into an alternating current of a corresponding power for use by a load. In this case, the controller 203 may be connected to the DC/DC converter 201 and the DC/AC converter 202, and is configured to control, based on comparison between a change of the load power (that is, an output power of the DC/AC converter 202) and the maximum power output by the photovoltaic module 10 in the current illumination environment, the DC/DC converter 201 to switch between different modes.

It may be understood that, in the photovoltaic system 1 shown in FIG. 4, Uₚᵥ represents the output voltage of the photovoltaic module 10, U_{bus} represents the bus voltage on the direct current bus 204, and U_{ac} represents an output voltage of the DC/AC converter 202.

It may be understood that, in the photovoltaic system provided in this application, there may be a plurality of photovoltaic modules connected to the input end of the photovoltaic inverter. The plurality of photovoltaic modules may be connected in series and/or in parallel and then connected to the photovoltaic inverter. FIG. 2 to FIG. 4 are merely examples for description. A quantity of photovoltaic modules in the photovoltaic system is not limited in this application. Optionally, output currents of the plurality of photovoltaic modules may be converged by using a combiner box (that is, the plurality of photovoltaic modules are connected in parallel and then connected to the combiner box) and then provide a direct current input voltage for the photovoltaic inverter. To be specific, the photovoltaic system may further include the combiner box. The plurality of photovoltaic modules may be connected to the photovoltaic inverter through the combiner box, and the photovoltaic inverter is connected to the alternating current power grid.

For ease of description, the following uses the structure of the photovoltaic system shown in FIG. 2 to describe function implementation of the photovoltaic inverter and the power adjustment method for the photovoltaic inverter provided in embodiments of this application by using examples.

In some feasible implementations, the control unit 203 of the photovoltaic inverter 20 may be configured to: when the load power (that is, the output power of the photovoltaic inverter 20, which is not described below again) is less than the maximum power output by the photovoltaic module 10 in the current illumination environment, control the direct current conversion unit 201 to switch from an MPPT mode to a bus constant mode, so that an input voltage of the direct current conversion unit 201 changes with the load power (that is, the output power of the photovoltaic inverter 20), and an output power of the photovoltaic module 10 and an output power needed by the photovoltaic inverter 20 keep being adjusted synchronously. The bus constant mode is to adjust an output voltage of the direct current conversion unit 201 to a constant value or to be within a preset range. A lower limit value of the preset range is a peak value of the output voltage of the alternating current inverter unit 202, and an upper limit value of the preset range may be obtained based on experimental data in an actual application scenario. In other words, the preset range may be greater than the lower limit value and less than the upper limit value.

It should be noted that when the direct current conversion unit 201 is in the MPPT mode, the direct current conversion unit 201 performs MPPT to maximize an output power of the direct current conversion unit 201. When performing MPPT, the direct current conversion unit 201 may perturb a port voltage of the photovoltaic module 10 (that is, the input voltage of the direct current conversion unit 201) at a fixed step size, to perform maximum power tracking. When the direct current conversion unit 201 is in the bus constant mode, the direct current conversion unit 201 adjusts the output voltage of the direct current conversion unit 201 to the constant value or to be within the preset range, so that the bus voltage U_{bus} remains in a constant voltage state. The constant voltage state herein does not mean that the voltage is constant at a value. The constant voltage state herein is relative. Certainly, the constant voltage state may allow fluctuation within a specific range.

In other words, when controlling the direct current conversion unit 201 to switch from the MPPT mode to the bus constant mode, the control unit 203 of the photovoltaic inverter 20 switches from controlling the input voltage of the direct current conversion unit 201 to controlling, by adjusting a duty cycle of a control signal of the direct current conversion unit 201, the output voltage of the direct current conversion unit 201 to be adjusted to the constant value or to be within the preset range.

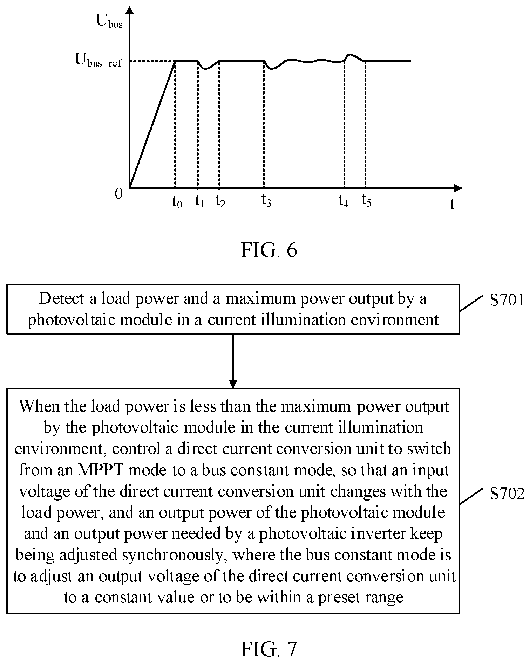

For ease of understanding, the following describes the function implementation of the photovoltaic inverter by using examples in combination with a curve of a power and a voltage (P-U) output by the photovoltaic module and a bus voltage-time (U_{bus}-t) curve, in different cases for the photovoltaic inverter. FIG. 5 is a diagram of a P-U curve of a photovoltaic module according to an embodiment of this application. In FIG. 5, a horizontal coordinate represents the output voltage Uₚᵥ of the photovoltaic module, that is, an input voltage of the photovoltaic inverter (or the direct current conversion unit); and a vertical coordinate represents the output power P of the photovoltaic module, that is, an input power of the photovoltaic inverter (or the direct current conversion unit). Herein, Pₘₐₓ is a maximum power of the photovoltaic module in a specific illumination environment, and a corresponding point c is a maximum power point. FIG. 6 is a diagram of a bus voltage-time curve according to an embodiment of this application. In FIG. 6, a horizontal coordinate represents time (time, denoted as t), a vertical coordinate represents the bus voltage U_{bus}, and U_{bus_ref} represents a bus reference voltage value. In one example, the lower limit value of the preset range may be a minimum value of U_{bus} from t₀ to t₅ in FIG. 6, and the upper limit value of the preset range may be a maximum value of U_{bus} from t₀ to t₅ in FIG. 6.

It may be understood that when t = 0, the photovoltaic inverter 20 is not started.

In some feasible implementations, when 0 < t ≤ t₀, and the load power (P_{ac}) is zero, in a start process of the photovoltaic inverter 20, the direct current conversion unit 201 is in the bus constant mode, and the photovoltaic module 10 works at a point a on the photovoltaic curve (that is, the P-U curve) shown in FIG. 5. The direct current conversion unit 201 may collect the bus voltage U_{bus} of the direct current bus 204, and may increase the output voltage of the direct current conversion unit 201 to the preset bus reference voltage value U_{bus_ref} based on an input voltage Uₐ provided by the photovoltaic module 10 (in this case, the input voltage Uₐ provided by the photovoltaic module 10 may be close to an open-circuit voltage of the photovoltaic module 10 in the current illumination environment), to implement the bus constant mode. In other words, in the start process of the photovoltaic inverter 20, even if the load power P_{ac} is zero, the output power P of the photovoltaic module 10 (or the input power of the direct current conversion unit 201) is not zero, to start the photovoltaic inverter 20. It may be understood that, in this embodiment of this application, when the load power P_{ac} is zero, the photovoltaic inverter 20 is started by using a very small input power, so that energy consumption can be reduced.

The bus reference voltage value U_{bus_ref} is a value within the preset range. It may be learned from the foregoing connection relationships shown in FIG. 2 to FIG. 4 that the output voltage of the direct current conversion unit 201 is equal to the bus voltage U_{bus}. Therefore, increasing the output voltage of the direct current conversion unit 201 to the bus reference voltage value U_{bus_ref} is equivalent to increasing the bus voltage U_{bus} to the bus reference voltage value U_{bus_ref}.

It may be understood that, when t₀ < t < t₁, the load power P_{ac} is still 0, and the bus voltage U_{bus} remains at the bus reference voltage value U_{bus_ref}.

In some feasible implementations, when t = t₁, the photovoltaic inverter 20 starts to work, and the load power P_{ac} starts to rise. In a working process (after the moment t₁) of the photovoltaic inverter 20, when the direct current conversion unit 201 is in the bus constant mode, the direct current conversion unit 201 (which may be specifically the DC/DC control circuit 2012 shown in FIG. 3) may monitor the bus voltage U_{bus} of the direct current bus 204 and the output power of the photovoltaic module 10 in real time. It may be understood that, when the load power P_{ac} changes, the bus voltage U_{bus} fluctuates temporarily. Consequently, the bus voltage U_{bus} is not equal to the preset bus reference voltage value U_{bus_ref}. For example, when the load power P_{ac} rises, a phenomenon in which the bus voltage U_{bus} drops transiently occurs. This is because the sudden rise of the load power P_{ac} causes reduction of energy stored on the two ends of the direct current bus 204, and therefore further causes the phenomenon in which the bus voltage U_{bus} drops transiently. For another example, a drop of the load power P_{ac} causes an increase of energy accumulated on the two ends of the direct current bus 204, and therefore further causes a phenomenon in which the bus voltage U_{bus} rises transiently.

When t₁ < t ≤ t₂, the load power P_{ac} rises to be greater than zero and less than the maximum power Pₘₐₓ output by the photovoltaic module 10 in the current illumination environment, and the direct current conversion unit 201 is still in the bus constant mode. When the direct current conversion unit 201 detects that the output voltage of the direct current conversion unit 201 drops to be less than the preset bus reference voltage value U_{bus_ref}, the direct current conversion unit 201 may increase the output power of the photovoltaic module 10, so that the output voltage of the direct current conversion unit 201 rises to the bus reference voltage value U_{bus_ref}, to implement the bus constant mode. For example, the direct current conversion unit 201 controls a working point of the photovoltaic module 10 to migrate from the point a to a point b on the photovoltaic curve (that is, the P-U curve) shown in FIG. 5. It may be understood that because the output end of the direct current conversion unit 201 is connected to the direct current bus, the output voltage of the direct current conversion unit 201 is equal to the bus voltage U_{bus}. Therefore, increasing the output voltage of the direct current conversion unit 201 to the bus reference voltage value U_{bus_ref} is increasing the bus voltage U_{bus} to the bus reference voltage value U_{bus_ref}.

When t₂ < t < t₃, the load power P_{ac} remains unchanged, and the bus voltage U_{bus} remains at the bus reference voltage value U_{bus_ref}.

When t = t₃, the load power P_{ac} continues to rise, the phenomenon in which the bus voltage U_{bus} drops transiently still occurs.

When t₃ < t < t₄, the load power P_{ac} rises to be greater than or equal to the maximum power Pₘₐₓ output by the photovoltaic module 10 in the current illumination environment. In this period (that is, when t₃ < t ≤ t₄), before the load power P_{ac} rises to be equal to the maximum power Pₘₐₓ output by the photovoltaic module 10 in the current illumination environment, the direct current conversion unit 201 is still in the bus constant mode. In addition, when the direct current conversion unit 201 detects that the output voltage of the direct current conversion unit 201 drops to be less than the bus reference voltage value U_{bus_ref}, the direct current conversion unit 201 increases the output power of the photovoltaic module 10. For example, the direct current conversion unit 201 controls the working point of the photovoltaic module 10 to migrate from the point b to the point c on the photovoltaic curve (that is, the P-U curve) shown in FIG. 5. However, when the control unit 203 finds that the load power P_{ac} is greater than or equal to the maximum power Pₘₐₓ output by the photovoltaic module 10 in the current illumination environment, the control unit 203 is further configured to control the direct current conversion unit 201 to switch from the bus constant mode to the MPPT mode to perform MPPT on the photovoltaic module 10. In this case, the working point of the photovoltaic module 10 fluctuates near the point c on the photovoltaic curve (that is, the P-U curve) shown in FIG. 5, that is, fluctuates near the maximum power point.

When t = t₄, the load power P_{ac} starts to drop. In a process in which the load power P_{ac} drops, the bus voltage U_{bus} may rise transiently.

Alternatively, when the direct current conversion unit 201 is in the MPPT mode, and the alternating current inverter unit 202 detects that the output voltage of the direct current conversion unit 201 is not equal to the preset bus reference voltage value U_{bus_ref}, the alternating current inverter unit 202 lowers the output power of the alternating current inverter unit 202 to adjust the output voltage of the direct current conversion unit 201 to the bus reference voltage value U_{bus_ref}. In this case, the load power P_{ac} may drop because the alternating current inverter unit 202 actively lowers the output power of the alternating current inverter unit 202 when the alternating current inverter unit 202 detects that the output voltage of the direct current conversion unit 201 is not equal to the bus reference voltage value U_{bus_ref} and the direct current conversion unit 201 is in the MPPT mode; or certainly because an input power needed by the load drops. This is not limited in this embodiment of this application.

It may be understood that, because the output power of the alternating current inverter unit 202 is equal to the load power P_{ac}, in the period of t₄ < t ≤ t₅, when the output power of the alternating current inverter unit 202 is lowered to be less than the maximum power Pₘₐₓ output by the photovoltaic module 10 in the current illumination environment, the control unit 203 may control the direct current conversion unit 201 to switch from the MPPT mode back to the bus constant mode. It may be further understood that, after the direct current conversion unit 201 switches back to the bus constant mode, when the direct current conversion unit 201 detects that the output voltage of the direct current conversion unit 201 rises to be greater than the bus reference voltage value U_{bus_ref}, the direct current conversion unit 201 may lower the output power of the photovoltaic module 10, to lower the output voltage of the direct current conversion unit 201 to the bus reference voltage value U_{bus_ref}. For example, the direct current conversion unit 201 controls the working point of the photovoltaic module 10 to migrate from the point c to the point b or from the point c to a point b' on the photovoltaic curve (that is, the P-U curve) shown in FIG. 5.

Alternatively, when lowering the output power of the photovoltaic module 10, the direct current conversion unit 201 may control the port voltage of the photovoltaic module 10 to drop to a target voltage value U_{b'}. The target voltage value U_{b'} is less than a voltage value U_{c} corresponding to the maximum power output by the photovoltaic module 10 in the current illumination environment. In other words, the direct current conversion unit 201 controls the working point of the photovoltaic module 10 to migrate from the point c to the point b' on the photovoltaic curve (that is, the P-U curve) shown in FIG. 5, to lower the output power of the photovoltaic module 10. In this way, a possibility that the direct current conversion unit 201 and the alternating current inverter unit 202 fail can be reduced. It may be understood that when the load power P_{ac} drops to zero, the direct current conversion unit 201 controls the working point of the photovoltaic module 10 to migrate from the point c to the point a on the photovoltaic curve (that is, the P-U curve) shown in FIG. 5.

In some feasible implementations, when the direct current conversion unit 201 is in the bus constant mode, and the load power P_{ac} drops and the direct current conversion unit 201 detects that the output voltage of the direct current conversion unit 201 rises to be greater than the bus reference voltage value U_{bus_ref}, the direct current conversion unit 201 may lower the output power of the photovoltaic module 10 to lower the output voltage of the direct current conversion unit 201 to the bus reference voltage value U_{bus_ref}, to implement the bus constant mode.

It may be understood that, the photovoltaic module 10 is affected due to reasons such as illumination and shading, and the output power of the photovoltaic module 10 (that is, the input power of the direct current conversion unit 201) changes with a change of an illumination environment. Therefore, the direct current conversion unit 201 may repeatedly switch between the bus constant mode and the MPPT mode. In this embodiment of this application, there is different implementation logic for the direct current conversion unit 201 in different modes. For details, refer to the foregoing descriptions. Details are not described herein again.

In this embodiment of this application, the direct current conversion unit 201 and the alternating current inverter unit 202 of the photovoltaic inverter 20 perform power coupling through the direct current bus 204. When the load power is less than the maximum power output by the photovoltaic module 10 in the current illumination environment, the control unit 203 controls the direct current conversion unit 201 to switch from the MPPT mode to the bus constant mode, so that the input voltage of the direct current conversion unit 201 changes with the load power, and the output power of the photovoltaic module 10 and the output power needed by the photovoltaic inverter 20 keep being adjusted synchronously. In other words, the output power of the direct current conversion unit 201 changes with the output power of the photovoltaic inverter 20, to improve a power response speed of the direct current conversion unit 201, so that the output power of the direct current conversion unit 201 can quickly match the output power of the photovoltaic inverter 20. The bus constant mode is to adjust the output voltage of the direct current conversion unit 201 to the constant value or to be within the preset range.

FIG. 7 is a schematic flowchart of a power adjustment method for a photovoltaic inverter according to an embodiment of this application. The method is applied to the photovoltaic inverter. The photovoltaic inverter may be any one of the photovoltaic inverters shown in FIG. 2 to FIG. 4. The photovoltaic inverter may include a direct current conversion unit, an alternating current inverter unit, and a direct current bus. An input end of the direct current conversion unit is configured to connect to a photovoltaic module. An output end of the direct current conversion unit is connected to an input end of the alternating current inverter unit through the direct current bus. An output end of the alternating current inverter unit is configured to connect to a load.

As shown in FIG. 7, the power adjustment method for the photovoltaic inverter provided in this embodiment of this application may include the following steps.

S701: Detect a load power and a maximum power output by the photovoltaic module in a current illumination environment.

S702: When the load power is less than the maximum power output by the photovoltaic module in the current illumination environment, control the direct current conversion unit to switch from an MPPT mode to a bus constant mode, so that an input voltage of the direct current conversion unit changes with the load power, and an output power of the photovoltaic module and an output power needed by the photovoltaic inverter keep being adjusted synchronously. The bus constant mode is to adjust an output voltage of the direct current conversion unit to a constant value or to be within a preset range.

In some feasible implementations, after the photovoltaic inverter is started, the photovoltaic inverter may detect the load power and a maximum power output by the photovoltaic module in a current illumination environment in real time. When the load power is less than the maximum power output by the photovoltaic module in the current illumination environment, the direct current conversion unit is controlled to switch from the MPPT mode to the bus constant mode, so that an input voltage of the direct current conversion unit changes with the load power, and the output power of the photovoltaic module and the output power needed by the photovoltaic inverter keep being adjusted synchronously. The bus constant mode is to adjust the output voltage of the direct current conversion unit to the constant value or to be within the preset range. The preset range may be greater than a peak value of an output voltage of the alternating current inverter unit. In this way, it can be ensured that the alternating current inverter unit can output a current. The preset range may also be less than a value. The value may be obtained based on experimental data in an actual application scenario.

It should be noted that when the direct current conversion unit is in the MPPT mode, the photovoltaic inverter performs MPPT to maximize an output power of the photovoltaic inverter. When performing MPPT, the photovoltaic inverter may perturb a port voltage of the photovoltaic module (that is, the input voltage of the direct current conversion unit) at a fixed step size, to perform maximum power tracking. When the direct current conversion unit is in the bus constant mode, the photovoltaic inverter adjusts the output voltage of the direct current conversion unit to the constant value or to be within the preset range, so that a bus voltage of the direct current bus remains in a constant voltage state. The constant voltage state herein does not mean that the voltage is constant at a value. The constant voltage state herein is relative. Certainly, the constant voltage state may allow fluctuation within a specific range.

Therefore, controlling the direct current conversion unit to switch from the MPPT mode to the bus constant mode includes: when controlling the direct current conversion unit to switch from the MPPT mode to the bus constant mode, adjusting a duty cycle of a control signal of the direct current conversion unit, to switch from controlling the input voltage of the direct current conversion unit to controlling the output voltage of the direct current conversion unit to be adjusted to the constant value or to be within the preset range.

It may be understood that when the load power changes, the bus voltage fluctuates temporarily. For example, when the load power rises, a phenomenon in which the bus voltage drops transiently occurs. Alternatively, when the load power drops, a phenomenon in which the bus voltage rises transiently occurs.

In some feasible implementations, in a start process of the photovoltaic inverter, when the load power is zero, the direct current conversion unit is in the bus constant mode. The photovoltaic inverter may collect the bus voltage of the direct current bus, and may increase the output voltage of the direct current conversion unit to a preset bus reference voltage value based on an input voltage provided by the photovoltaic module (in this case, the input voltage provided by the photovoltaic module may be close to an open-circuit voltage of the photovoltaic module in the current illumination environment), to implement the bus constant mode. The bus reference voltage value is a value within the preset range.

Then, the load power rises. When the load power rises to be greater than zero and less than the maximum power output by the photovoltaic module in the current illumination environment, the direct current conversion unit is still in the bus constant mode. When detecting that the output voltage of the direct current conversion unit drops to be less than a bus reference voltage value, the photovoltaic inverter increases the output power of the photovoltaic module, so that the output voltage of the direct current conversion unit rises to the bus reference voltage value, to implement the bus constant mode.

Alternatively, when the photovoltaic inverter finds that the load power rises to be greater than or equal to the maximum power output by the photovoltaic module in the current illumination environment, the direct current conversion unit is controlled to switch from the bus constant mode to the MPPT mode to perform MPPT on the photovoltaic module.

In some feasible implementations, when the direct current conversion unit is in the bus constant mode and the load power drops, and the photovoltaic inverter detects that the output voltage of the direct current conversion unit rises to be greater than the bus reference voltage value, the photovoltaic inverter may lower the output power of the photovoltaic module to lower the output voltage of the direct current conversion unit to the bus reference voltage value, to implement the bus constant mode.

In some feasible implementations, when the load power is greater than or equal to the maximum power output by the photovoltaic module in the current illumination environment, the direct current conversion unit is controlled to switch from the bus constant mode to the MPPT mode to perform MPPT on the photovoltaic module.

Alternatively, when the direct current conversion unit is in the MPPT mode, and the photovoltaic inverter detects that the output voltage of the direct current conversion unit is not equal to the bus reference voltage value, the photovoltaic inverter lowers an output power of the alternating current inverter unit, to adjust the output voltage of the direct current conversion unit to the bus reference voltage value. It may be understood that, because the output power of the alternating current inverter unit is equal to the load power, when the output power of the alternating current inverter unit is lowered to be less than the maximum power output by the photovoltaic module in the current illumination environment, the photovoltaic inverter may control the direct current conversion unit to switch from the MPPT mode back to the bus constant mode. It may be further understood that, when the direct current conversion unit is in the bus constant mode, and the photovoltaic inverter detects that the output voltage of the direct current conversion unit rises to be greater than the bus reference voltage value, the photovoltaic inverter may lower the output power of the photovoltaic module to lower the output voltage of the direct current conversion unit to the bus reference voltage value.

In other words, after the output power of the alternating current inverter unit is lowered to adjust the output voltage of the direct current conversion unit to the bus reference voltage value, the power adjustment method further includes: controlling a port voltage of the photovoltaic module to lower to a target voltage value, to lower the output power of the photovoltaic module. The target voltage value is less than a voltage value corresponding to the maximum power output by the photovoltaic module in the current illumination environment. In this way, a possibility that the direct current conversion unit and the alternating current inverter unit fail can be reduced.

In this embodiment of this application, when the load power is less than the maximum power output by the photovoltaic module in the current illumination environment, the direct current conversion unit is controlled to switch from the MPPT mode to the bus constant mode, so that the input voltage of the direct current conversion unit changes with the load power, and the output power of the photovoltaic module and the output power needed by the photovoltaic inverter keep being adjusted synchronously. In other words, the output power of the direct current conversion unit changes with the output power of the alternating current inverter unit, to improve a power response speed of the direct current conversion unit, so that the output power of the direct current conversion unit can quickly match the output power of the alternating current inverter unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A photovoltaic inverter, wherein the photovoltaic inverter comprises a direct current conversion unit, an alternating current inverter unit, a control unit, and a direct current bus, an input end of the direct current conversion unit is configured to connect to a photovoltaic module, an output end of the direct current conversion unit is connected to an input end of the alternating current inverter unit through the direct current bus, and an output end of the alternating current inverter unit is configured to connect to a load; and
the control unit is configured to: when a load power is less than a maximum power output by the photovoltaic module in a current illumination environment, control the direct current conversion unit to switch from a maximum power point tracking MPPT mode to a bus constant mode, so that an input voltage of the direct current conversion unit changes with the load power, and an output power of the photovoltaic module and an output power needed by the photovoltaic inverter keep being adjusted synchronously, wherein the bus constant mode is to adjust an output voltage of the direct current conversion unit to a constant value or to be within a preset range.

2. The photovoltaic inverter according to claim 1, wherein the control unit is configured to: when controlling the direct current conversion unit to switch from the MPPT mode to the bus constant mode, switch from controlling the input voltage of the direct current conversion unit to controlling, by adjusting a duty cycle of a control signal of the direct current conversion unit, the output voltage of the direct current conversion unit to be adjusted to the constant value or to be within the preset range.

3. The photovoltaic inverter according to claim 1, wherein the direct current conversion unit is configured to: when the load power is zero, increase the output voltage of the direct current conversion unit to a bus reference voltage value based on an input voltage provided by the photovoltaic module, to implement the bus constant mode, wherein the bus reference voltage value is greater than a lower limit value of the preset range and less than an upper limit value of the preset range.

4. The photovoltaic inverter according to claim 1, wherein the direct current conversion unit is configured to: when the load power rises to be greater than zero and less than the maximum power output by the photovoltaic module in the current illumination environment, and it is detected that the output voltage of the direct current conversion unit drops to be less than a bus reference voltage value, increase the output power of the photovoltaic module, so that the output voltage of the direct current conversion unit rises to the bus reference voltage value, to implement the bus constant mode, wherein the bus reference voltage value is greater than a lower limit value of the preset range and less than an upper limit value of the preset range.

5. The photovoltaic inverter according to claim 4, wherein the direct current conversion unit is configured to: when the load power drops, and it is detected that the output voltage of the direct current conversion unit rises to be greater than the bus reference voltage value, lower the output power of the photovoltaic module, so that the output voltage of the direct current conversion unit drops to the bus reference voltage value, to implement the bus constant mode.

6. The photovoltaic inverter according to any one of claims 1 to 5, wherein the control unit is further configured to: when the load power is greater than or equal to the maximum power output by the photovoltaic module in the current illumination environment, control the direct current conversion unit to switch from the bus constant mode to the MPPT mode to perform MPPT on the photovoltaic module.

7. The photovoltaic inverter according to claim 6, wherein the alternating current inverter unit is configured to: when it is detected that the output voltage of the direct current conversion unit is not equal to the bus reference voltage value, lower an output power of the alternating current inverter unit, to adjust the output voltage of the direct current conversion unit to the bus reference voltage value, wherein the bus reference voltage value is greater than the lower limit value of the preset range and less than the upper limit value of the preset range.

8. A power adjustment method for a photovoltaic inverter, applied to the photovoltaic inverter, wherein the photovoltaic inverter comprises a direct current conversion unit, an alternating current inverter unit, and a direct current bus, an input end of the direct current conversion unit is configured to connect to a photovoltaic module, an output end of the direct current conversion unit is connected to an input end of the alternating current inverter unit through the direct current bus, and an output end of the alternating current inverter unit is configured to connect to a load; and the method comprises:
detecting a load power and a maximum power output by the photovoltaic module in a current illumination environment; and
when the load power is less than the maximum power output by the photovoltaic module in the current illumination environment, controlling the direct current conversion unit to switch from a maximum power point tracking MPPT mode to a bus constant mode, so that an input voltage of the direct current conversion unit changes with the load power, and an output power of the photovoltaic module and an output power needed by the photovoltaic inverter keep being adjusted synchronously, wherein the bus constant mode is to adjust an output voltage of the direct current conversion unit to a constant value or to be within a preset range.

9. The method according to claim 8, wherein the step of controlling the direct current conversion unit to switch from a maximum power point tracking MPPT mode to a bus constant mode comprises: when controlling the direct current conversion unit to switch from the MPPT mode to the bus constant mode, adjusting a duty cycle of a control signal of the direct current conversion unit, to switch from controlling the input voltage of the direct current conversion unit to controlling the output voltage of the direct current conversion unit to be adjusted to the constant value or to be within the preset range.

10. The method according to claim 8, wherein after the controlling the direct current conversion unit to switch from a maximum power point tracking MPPT mode to a bus constant mode, the method further comprises:
when the load power is zero, increasing the output voltage of the direct current conversion unit to a bus reference voltage value based on an input voltage provided by the photovoltaic module, to implement the bus constant mode, wherein the bus reference voltage value is greater than a lower limit value of the preset range and less than an upper limit value of the preset range.

11. The method according to claim 8, wherein after the controlling the direct current conversion unit to switch from a maximum power point tracking MPPT mode to a bus constant mode, the method further comprises:
when the load power rises to be greater than zero and less than the maximum power output by the photovoltaic module in the current illumination environment, and it is detected that the output voltage of the direct current conversion unit drops to be less than a bus reference voltage value, increasing the output power of the photovoltaic module, so that the output voltage of the direct current conversion unit rises to the bus reference voltage value, to implement the bus constant mode, wherein the bus reference voltage value is greater than a lower limit value of the preset range and less than an upper limit value of the preset range.

12. The method according to claim 11, wherein after the controlling the direct current conversion unit to switch from a maximum power point tracking MPPT mode to a bus constant mode, the method further comprises:
when the load power drops, and it is detected that the output voltage of the direct current conversion unit rises to be greater than the bus reference voltage value, lowering the output power of the photovoltaic module, so that the output voltage of the direct current conversion unit drops to the bus reference voltage value, to implement the bus constant mode.

13. The method according to any one of claims 8 to 12, wherein the method further comprises:
when the load power is greater than or equal to the maximum power output by the photovoltaic module in the current illumination environment, controlling the direct current conversion unit to switch from the bus constant mode to the MPPT mode to perform MPPT on the photovoltaic module.

14. The method according to claim 13, wherein after the controlling the direct current conversion unit to switch from the bus constant mode to the MPPT mode, the method further comprises:
when it is detected that the output voltage of the direct current conversion unit is not equal to the bus reference voltage value, lowering an output power of the alternating current inverter unit, to adjust the output voltage of the direct current conversion unit to the bus reference voltage value, wherein the bus reference voltage value is greater than the lower limit value of the preset range and less than the upper limit value of the preset range.

15. The method according to claim 14, wherein after the lowering an output power of the alternating current inverter unit, to adjust the output voltage of the direct current conversion unit to the bus reference voltage value, the method further comprises:
controlling a port voltage of the photovoltaic module to drop to a target voltage value, wherein the target voltage value is less than a voltage value corresponding to the maximum power output by the photovoltaic module in the current illumination environment.

16. A photovoltaic system, wherein the photovoltaic system comprises a photovoltaic module and the photovoltaic inverter according to any one of claims 1 to 7 or the photovoltaic inverter that uses the power adjustment method according to any one of claims 8 to 15;
an input end of the photovoltaic inverter is connected to the photovoltaic module, and an output end of the photovoltaic inverter is configured to connect to a load; and
the photovoltaic inverter is configured to: convert a direct current of the photovoltaic module into an alternating current and input the alternating current to the load; and when a load power is less than a maximum power output by the photovoltaic module in a current illumination environment, control the direct current conversion unit to switch from a maximum power point tracking MPPT mode to a bus constant mode, so that an input voltage of the direct current conversion unit changes with the load power, and an output power of the photovoltaic module and an output power needed by the photovoltaic inverter keep being adjusted synchronously, wherein the bus constant mode is to adjust an output voltage of the direct current conversion unit to a constant value or to be within a preset range.
